# EUROPEAN PATENT APPLICATION

(11) **EP 4 169 791 A1**
(43) Date of publication of application: **26.04.2023**
(21) Application number: 22199615.0
(22) Date of filing: 12.10.2021
(51) Int. Cl.: B60W 30/18, B60W 60/00, B60K 35/00

(54) **A DRIVING CONTROL SYSTEM FOR A VEHICLE**

(62) Divisional of application: 21202187.7
(71) Applicant: Volvo Car Corporation, 405 31 Göteborg (SE)
(72) Inventor: Broström, Robert, 40531 Göteborg (SE)
(74) Representative: Maiwald GmbH

(57) **Abstract**

The present disclosure relates to a driving control system for a vehicle, a vehicle capable to operate with such a driving control system, a driving control method for a vehicle and a computer program element for a driving control.

The driving control system comprises a sensor unit, a data storage unit and a control unit. The sensor unit is arrangeable in the vehicle and configured to detect at least one driving parameter of the vehicle during travelling. The control unit is configured to generate at least one driving mode based on the at least one driving parameter. The data storage unit is configured to store the at least one driving driving mode. The control unit is configured to receive an input whether the vehicle continues traveling in a current driving mode or changes to one of the driving modes stored in the data storage unit. The control unit is further configured to simulate the driving mode based on the input, even though the vehicle stops travelling.

## Description

### TECHNICAL FIELD

The present disclosure relates to a driving control system for a vehicle, a vehicle capable to operate with such a driving control system, a driving control method for a vehicle and a computer program element for a driving control.

### BACKGROUND ART

The autonomous driving technology provides comfort to occupants of a vehicle by taking over operational decisions to propel the vehicle without any human control. While travelling, the occupants thus may do anything besides driving such as watching, reading or even sleeping. However, if a driving mode of the vehicle needs to be changed, for instance due to a traffic situation, a change from a rural road to a highway, from driving to stopping or the like, the occupants may realize the change or break of the driving mode immediately based on the change of acceleration, vibration, sound, etc. of the vehicle to be transmitted to the occupants. This may lead to inconvenience for the occupants.

### SUMMARY

Hence, there may be a need to provide an improved driving control system, which may provide a user sustained motion of a vehicle independently of a current driving situation.

The problem is at least partially solved or alleviated by the subject matter of the independent claims of the present disclosure, wherein further embodiments are incorporated in the dependent claims. It should be noted that the aspects of the disclosure described in the driving control system for a vehicle, the vehicle capable to operate with such a driving control system, the method for a driving control for a vehicle and the computer program element for a driving control.

According to the present disclosure, a driving control system for a vehicle is presented. The driving control system comprises a sensor unit, a data storage unit and a control unit. The sensor unit is arrangeable in the vehicle and configured to detect at least one driving parameter of the vehicle during travelling. The control unit is configured to generate at least one driving mode based on the at least one driving parameter. The data storage unit is configured to store the at least one driving mode. The control unit is configured to receive an input whether the vehicle continues traveling in a current driving mode or changes to one of the driving modes stored in the data storage unit. The control unit is further configured to simulate the driving mode based on the input, even though the vehicle stops travelling.

The driving control system according to the present disclosure enables the vehicle to maintain a specific motion, which may be transferred the user occupied in the vehicle, even though the vehicle changes its driving mode. In particular, if the vehicle reduces or increases its speed or even starts or stops, the driving control system may control the vehicle to imitate the latest motion before change or any preferred motion of the user. Accordingly, the driving control system can provide a seamless transition of the driving mode, thus more comfort to the user.

The driving control system may be suitable for a vehicle, which particularly comprises an autonomous function to support a driver. The user may be the driver or a passenger of the vehicle. The autonomous function may allow a fully-automated self-driving mode of the vehicle or at least an automated driving mode with little supervision of the driver. Such a vehicle comprising the autonomous function may utilize various sensor technologies for a safe travel.

The sensor unit may comprise a plurality of sensor elements arranged inside and/or outside the vehicle to detect driving parameters, interior parameters and/or surrounding parameters of the vehicle. Accordingly, the sensor unit may comprise vehicle control sensor elements, vehicle monitoring sensor elements, environment monitoring sensor elements, driver monitoring sensor elements or the like. The vehicle control sensor elements may comprise a longitudinal acceleration/deceleration sensor element, a lateral acceleration /deceleration sensor element, a steering angle sensor element, etc. The monitoring sensor elements may comprise optical sensor elements, acoustic sensor elements, temperature sensor elements, etc. At least one of the sensor elements of the sensor unit may detect at least one driving parameter during travelling the vehicle. Preferably, the sensor unit may generate a plurality of driving parameters.

The control unit may be an electronic control unit (ECU) of the vehicle and configured to receive driving parameters from the sensor unit and control various actuators to operate the vehicle. Additionally or alternatively, the control unit may access the data storage unit in which the driving parameters generated by the sensor unit are stored.

The data storage unit may be configured to receive the driving parameter from the sensor unit. The driving parameters collected during a pre-defined time period and/or in the latest driving period of the vehicle may form a driving mode of the user travelling with the vehicle. The control unit may categorize the driving parameters during a pre-defined time period and/or in the latest driving period of the vehicle in the same driving mode together with the corresponding driving parameters and record the driving mode in the data storage unit.

The control unit may control the vehicle with respect to the user's input, which may be a selection of one the driving modes stored in the data storage unit. The user may enter such an input before starting to travel and/or during travelling. However, the user may not enter any input, either. When the control unit receives the input, the control unit may maintain the driving mode and/or at least mimic the driving mode despite the vehicle stops travelling.

For instance, a preferred driving mode may comprise at least a vibration parameter, a sound parameter, a climate parameter and/or an interior lighting parameter. The user may determine before or during travelling, if the preferred driving mode may be simulated in case of a certain driving condition. Hence, even if the vehicle stops temporarily and/or consistently, the vehicle may mimic the same driving parameters as stored in the preferred driving mode.

In an example, the control unit is configured to receive the input during travelling the vehicle. The user may recognize a need to simulate one of the driving modes during travelling. The control unit may receive a corresponding input of the user and control the vehicle accordingly. If one of the occupants fell asleep during travelling, for instance, the user may activate a driving mode such that current or selected driving parameters may be further simulated without a break during travelling and/or after arriving a destination. Accordingly, the driving parameters based on user's experience may be sustained. Further, the user may have a possibility to manually save the current driving mode by entering an input.

In an example, the control unit is configured to receive the input before travelling and adapt automatically the driving mode based on the input. The user may be able to adjust the driving mode before starting to travel. For instance, user may set the driving mode such that the selected driving mode may be automatically simulated in case the sensor unit detects that the vehicle reduces the speed and/or one of the occupants in the vehicle fell asleep. Additionally, the user may activate the simulation of the selected driving mode during the entire travelling independently of an activity of the occupants.

In an example, the control unit is configured to automatically adapt the driving mode when the vehicle slows down and/or enters in a new driving situation. The control unit may identify the new driving situation based on the driving data generated by the sensor unit. The new driving situation may be, for instance, a change of a traffic signal, a traffic jam, a change of road, e.g. from a rural road to a motorway, a temporary stop or arriving a destination. In such a case, the control unit may prompt the vehicle to simulate the latest driving mode and/or the driving mode selected by the user automatically. Accordingly, the occupants may perceive a steadily sustained motion of the vehicle, which can provide more comfort.

In an example, the driving parameter comprises at least mechanical driving data comprising vibration of the vehicle, lateral acceleration, lateral deceleration, longitudinal acceleration and/or longitudinal deceleration. The driving parameter may be based on a driving behavior of the driver driving the vehicle and/or it may reflect operational preferences of the user for driving the vehicle. Thus, the driving parameter may include acceleration, deceleration, lane-changing, speed of cornering, driving speed (e.g., a speed equal to a speed limit, a speed that is 10% under/over the speed limit, a speed equal to other cars traveling a route, a speed within a speed range, etc.) and/or a fuel performance.

In an example, the driving parameter further comprises acoustic data, interior lighting data, interior ambient data and/or seat adjustment data. In other words, the driving parameter may further comprise at least one ambient preference of the user. The ambient preference may comprise cabin temperature, seat adjustment, cabin lighting, music/sound setting, etc. The user may store the ambient preference manually to the driving mode. Additionally or alternatively, the control unit may prompt the data storage unit to store the ambient preference together with the driving parameter automatically, which may form together a driving mode.

In an example, the control unit is configured to receive the input via a graphical user interface (GUI) and/or a wireless communication means. In other words, the driving control system may further comprise a graphical user interface and/or a wireless communication means. The graphical user interface unit/or the wireless communication means may be an interface between the user and the vehicle. In case the user wishes to save the driving parameter of the current travelling vehicle, the user may be able to prompt the sensor unit to transmit the generated driving parameter to the data storage unit. Further, the graphical user interface unit/or the wireless communication means may receive an input of the user selected from the different driving modes, which may be shown in the graphical user interface.

The graphical user interface may be integrated in the vehicle, e.g. a Center Stack Display (SCD), an Infotainment Head Unit (IHU). Additionally or alternatively, the graphical user interface unit may be also integrated at each seat, for instance at a rear seat, such that the user may utilize it at every seat of the vehicle. The graphical user interface may be also integrated in the wireless communication means.

The wireless communication means may be integrated in the mobile device of the user and executed by a mobile application. Accordingly, the user may have an easy access to the driving control system regardless of any particular travelling vehicle. The mobile device may be any network-compatible portable devices, for instance, a smartphone, a smartwatch, a tablet, a smart speaker, etc.

In an example, the sensor unit, the data storage unit and/or the control unit may communicate via a wireless means with each other. Since the sensor unit, the data storage unit and/or the control unit may be spatially separated from each other, i.e. the sensor unit and/or the control unit may be arranged in the vehicle, the data storage unit may be a cloud-based storage system, and their mutual communication may be performed preferably via the wireless communication means. The wireless communication means may comprise wireless internet access, Wi-Fi, Bluetooth or the like.

In an example, the control unit is configured to simulate the determined driving mode, even though the vehicle stops travelling temporarily. The user may stop driving the vehicle for fueling, charging of the vehicle, waiting for signal changing, taking a break for a short nap or toilet. In such a case, the vehicle may be powered off such that any vibration and/or sound cannot be generated. However, the occupant may perceive such a change directly, which would cause interference or break of an act of the occupant. For instance, the occupant sleeping during travelling may wake up, if the vehicle stops driving. However, the driving control unit may enable a simulation of the selected and/or latest driving mode to sustain the motion of the vehicle. Hence, the user may not feel any difference despite the vehicle stops travelling.

In an example, the control unit is configured to simulate the determined driving mode, even though the vehicle ends travelling. The driving control unit may mimic the determined driving mode not only during a temporary stop but also after arriving a destination. For instance, the occupant may continue sleeping despite the vehicle has reached the destination without perceiving any environmental differences, since the vehicle mimics the driving mode. Accordingly, the driving control system may provide more comfort to the user.

In an example, the data storage unit is a local and/or cloud-based data storage unit and configured to provide an access to a user independently of the vehicle occupied by the user. Preferably, the data storage unit may be cloud-based, thereby an access to the data storage unit may not be limited to an access location as long as a network connection to the data storage unit is available. Additionally or alternatively, each vehicle may comprise a local data storage unit, which may be synchronized with the cloud-based data storage unit in predefined time intervals or in real time.

The wireless communication means may allow the user to access the data storage unit and/or the driving control system regardless of the vehicle, whether the vehicle belongs to the user or not. In other words, the user may be able to prompt the driving control system to simulate a specific driving mode stored in the data storage unit by loading the driving mode in any vehicle via the wireless communication means. Accordingly, the user may travel in a familiar environment regardless of what vehicle the user travels. The vehicle may be a user's own vehicle, of a vehicle of another person, a taxi and/or a robocab.

According to the present disclosure, a vehicle is presented. The vehicle comprises a driver assistance system, which is capable to operate with a driving control system as described above. Accordingly, the vehicle may be able to simulate a driving mode determined by the user, thus sustain particular motion with respect to driving parameters stored in the data storage unit. Hence, the vehicle may provide more comfort to the user.

In an example, the vehicle is an autonomous vehicle. By providing the driving control system to an autonomous vehicle, which operates fully automated without any human control, the user travelling with the vehicle may obtain a customized familiar driving environment.

According to the present disclosure, a driving control method for a vehicle is presented. The method comprises, but not necessarily in this order:
- detecting at least one driving parameter of the vehicle during travelling by a sensor unit,
- generating at least one driving mode based on the one driving parameter,
- storing the driving mode in a data storage unit,
- receiving an input to determine a driving mode whether the vehicle continues traveling in a current driving mode or changes to one of the driving modes stored in the data storage unit, and
- simulating the determined driving mode, even though the vehicle stops travelling.

The sensor unit is arrangeable in the vehicle.

According to the present disclosure, a computer program element is presented. The computer program element is configured for a driving control system as described above. The program element is adapted to perform the method steps as described above, when being executed by a processing element.

It should be noted that the above embodiments may be combined with each other irrespective of the aspect involved. Accordingly, the method may be combined with structural features and, likewise, the system may be combined with features described above with regard to the method.

These and other aspects of the present embodiments will become apparent from and elucidated with reference to the embodiments described hereinafter.

### BRIEF DESCRIPTION OF DRAWINGS

Exemplary embodiments will be described in the following with reference to the following drawings.
- Fig. 1: shows schematically and exemplarily an embodiment of a vehicle operating with a driving control system according to the present disclosure.
- Fig. 2: shows schematically and exemplarily an embodiment of a method for driving control for a vehicle according to the present disclosure.

### DESCRIPTION OF EMBODIMENTS

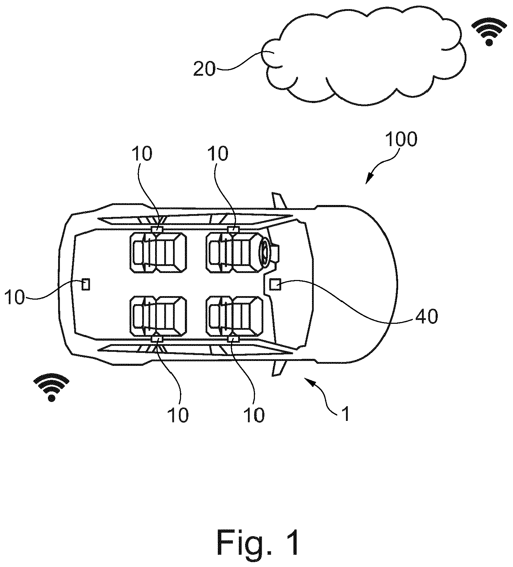

Fig. 1 shows a vehicle 100 comprising a driver assistance system, which is supported by a driving control system 1. The driver assistance system may support a driver of the vehicle 100 for any operational decisions or allow an autonomous travelling of the vehicle 100. The vehicle 100 may be a private vehicle of a user or another person, a shared vehicle, a taxi and/or a robocab. The user may be the driver or a passenger of the vehicle.

The driving control system 1 for a vehicle 100 comprises a sensor unit 10, a data storage unit 20 and a control unit (not shown). The sensor unit 10 is arrangeable in the vehicle 100 and configured to detect at least one driving parameter of the vehicle 100 during travelling. The sensor unit 10 comprises a plurality of sensor elements arranged inside and/or outside the vehicle 100 to detect driving parameters, interior parameters and/or surrounding parameters of the vehicle 100.

Accordingly, the sensor unit 10 may comprise vehicle control sensor elements, vehicle monitoring sensor elements, environment monitoring sensor elements, driver monitoring sensor elements or the like. At least one of the sensor elements of the sensor unit 10 may detect at least one driving parameter during travelling. Preferably, the sensor unit 10 may generate a plurality of driving parameters. The driving parameter may be related, for instance, to operational decisions of the vehicle 100 such as a longitudinal acceleration/deceleration, a lateral acceleration /deceleration, a steering angle, cruise control, lane changing, turning speed etc. In addition, the driving parameter comprises acoustic data from road, weather such as wind or rain, and drive train noise, interior light data such as dim light, repetitive light movement from outside, interior climate data and/or seat adjustment data.

The data storage unit 20 is configured to receive the driving parameters from the sensor unit 10 based on the user's input. Preferably, the data storage unit 20 is cloud-based, thereby an access to the data storage unit 20 may not be limited to an access location as long as a network connection to the data storage unit 20 is available.

The control unit is configured to categorize the driving parameters during a pre-defined time period and/or in the latest driving period of the vehicle 100 in the same driving mode and generate at least one driving mode based on the driving parameters. The control unit is further configured to record the driving mode in the data storage unit 20.

The control unit is further configured to receive an input of the user whether the vehicle 100 should mimic a current driving mode or changes to one of the driving modes stored in the data storage unit 20. The user may enter the input before or during travelling. The user may utilize a graphical user interface means 40 arranged in the vehicle 100 and/or a wireless communication means integrated in a mobile device of the user, to provide the input regarding the driving mode.

Based on the user's input, the control unit prompts the vehicle 100 to simulate the selected driving mode, even though the vehicle 100 stops travelling. The control unit is configured to simulate the determined driving mode, even though the vehicle 100 ends travelling and/or stops travelling temporarily. The control unit is configured to automatically change the current driving mode to the determined driving mode when the vehicle 100 slows down and/or enters in a new driving situation.

Since the sensor unit 10, the data storage unit 20 and/or the control unit may be spatially separated from each other, i.e. the sensor unit 10 and/or the control unit may be arranged in the vehicle 100, the data storage unit 20 may be a cloud-based storage system, and their mutual communication may be performed preferably via the wireless communication means. The wireless communication means may comprise wireless internet access, Wi-Fi, Bluetooth or the like.

Accordingly, the occupants may perceive a steadily sustained motion of the vehicle 100, which can provide more comfort.

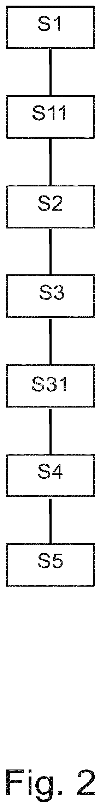

Fig.2 shows a schematic flow chart of a method for a driving control for a vehicle 100. The method comprises, but not necessarily in this order:
S1: detecting at least one driving parameter of the vehicle 100 during travelling by a sensor unit 10,
S11: receiving an input of a user to store the at least one driving parameter,
S2: generating at least one driving mode of a user occupied in the vehicle 100 based on the one driving parameter,
S3: storing the at least one driving mode in a data storage unit 20,
S31: showing the driving mode (s) in a graphical user interface 40,
S4: receiving an input of the user to determine a driving mode whether the vehicle 100 continues traveling in a current driving mode or changes to one of the driving modes stored in the data storage unit 20, and
S5: simulating the determined driving mode, even though the vehicle 100 stops travelling.

It has to be noted that embodiments of the disclosure are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed embodiments. Other variations to the disclosed embodiments can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A driving control system (1) for a vehicle (100), comprising
- a sensor unit (10),
- a data storage unit (20), and
- a control unit,
the sensor unit (10) being arrangeable in the vehicle (100) and configured to detect at least one driving parameter of the vehicle (100) during travelling,
the control unit being configured to generate at least one driving mode based on the at least one driving parameter,
the data storage unit (20) being configured to store the at least one driving mode,
the control unit being configured to receive an input whether the vehicle (100) continues traveling in a current driving mode or changes to one of the driving modes stored in the data storage unit (20), and
the control unit being further configured to simulate the driving mode based on the input, even though the vehicle (100) stops travelling, **characterized in that**
the data storage unit (20) is a local and/or cloud-based data storage unit (20) and further configured to provide an access to a user independently of the vehicle (100) occupied by the user.

2. The driving control system (1) according to claim 1, the control unit being configured to receive the input during travelling the vehicle (100)

3. The driving control system (1) according to claim 1 or 2, the control unit being configured to receive the input before travelling and adapt automatically the driving mode based on the input.

4. The driving control system (1) according to the preceding claim 3, the control unit being configured to automatically adapt the driving mode when the vehicle (100) slows down and/or enters in a new driving situation.

5. The driving control system (1) according to any of the preceding claims, the driving parameter comprising at least mechanical driving data, the mechanical driving data comprising vibration of the vehicle (100), lateral acceleration, lateral deceleration, longitudinal acceleration and/or longitudinal deceleration.

6. The driving control system (1) according to any of the preceding claims, the driving parameter further comprising acoustic data, interior light data, interior ambient data and/or seat adjustment data.

7. The driving control system (1) according to any of the preceding claims, the control unit being configured to receive the input via a graphical user interface (40) and/or a wireless communication means.

8. The driving control system (1) according any of the preceding claims, the control unit being configured to simulate the determined driving mode, even though the vehicle (100) stops travelling temporarily.

9. The driving control system (1) according to claim 1, the control unit being configured to simulate the determined driving mode, even though the vehicle (100) ends travelling.

10. A vehicle (100) comprising a driver assistance system, the driver assistance system being capable to operate with a driving control system (1) according to any of the preceding claims 1 to 9.

11. The vehicle (100) according to claim 10, being an autonomous vehicle (100).

12. A driving control method for a vehicle (100), comprising
- detecting (S1) at least one driving parameter of the vehicle (100) during travelling by a sensor unit (10),
- generating (S2) at least one driving mode based on the at least one driving parameter,
- storing (S3) the at least one driving mode in a data storage unit (20),
- receiving (S4) an input to determine a driving mode whether the vehicle (100) continues traveling in a current driving mode or changes to one of the driving modes stored in the data storage unit (20), and
- simulating (S5) the determined driving mode, even though the vehicle (100) stops travelling,
the sensor unit (10) being arrangeable in the vehicle (100), **characterized in that**
the data storage unit (20) is a local and/or cloud-based data storage unit (20) and further configured to provide an access to a user independently of the vehicle (100) occupied by the user.

13. A computer program element, for a vehicle (100) driving control system (1) according to claims 1 to 9, which, when being executed by a processing element, being adapted to perform the method steps of the method claim 12.
